# EUROPEAN PATENT APPLICATION

(11) **EP 2 876 597 A1**
(43) Date of publication of application: **27.05.2015**
(21) Application number: 14194298.7
(22) Date of filing: 21.11.2014
(51) Int. Cl.: G06Q 30/02

(54) **Method and system for monitoring exposure to physical advertisements**

(30) Priority: 25.11.2013 IL 22960313
(71) Applicant: Deutsche Telekom AG, 53113 Bonn (DE)
(72) Inventor: Chizi, Barak, Ashkelon (IL); Elovici, Yuval, Ashkelon (IL); Mimran, David, Tel Aviv (IL)
(74) Representative: Weickmann & Weickmann

(57) **Abstract**

In a system and method for monitoring exposure of people to physical advertisements, a computing device (20) receives positional data records associated with each of a plurality of mobile devices (2) within a given geographical region, from a base station (5), sets a mobility descriptor for each corresponding user, determines whether each user is predicted to be within a predetermined viewing range of one or more advertisements, in response to the set mobility descriptor, instantaneous speed and direction, and a predetermined viewing range, and counts the number of users who are predicted to be within the predetermined viewing range.

## Description

### Field of the Invention

The present invention relates to the field of online advertisement monitoring. More particularly, the invention relates to an online system and method for monitoring exposure to physical advertisements.

### Background of the Invention

Many systems are known to monitor e-commerce user behavior in terms of quantifying exposure to a given online advertisement by various models such as pay per click or pay per transaction, while being able to characterize a user according to a user profile.

Due to their ubiquitousness and unavoidability, there are many advantages of physical advertisements, such as those posted on billboards or on the sides of a bus, relative to virtual advertisements displayed to online users. However, advertisement planners or managers of an advertisement campaign are unable to adequately quantify the exposure to a physical advertisement due to the inability of knowing how many potential customers were in viewing range of the physical advertisement at a given time period and of acquiring or aggregating characteristics of those anonymous potential customers who were exposed to the physical advertisement.

It is an object of the present invention to provide a system and method for monitoring exposure to physical advertisements.

Other objects and advantages of the invention will become apparent as the description proceeds.

### Summary of the Invention

The present invention provides a system for monitoring exposure of people to physical advertisements, comprising a plurality of mobile devices, each of which held or accessed by a corresponding user of a mobile data network, a base station for coordinating call and data traffic with respect to said plurality of mobile devices within a given geographical region, and a computing device for quantifying exposure of said corresponding user to a physical advertisement, wherein said base station is operable to transmit instantaneous mobile device derived positional data to said computing device and said computing device is operable to determine whether said transmitted positional data is indicative of said corresponding user being within viewing range of a physical advertisement and to thereby count a total number of users who were in viewing range of said physical advertisement within a given time period.

The present invention is also directed to a method for monitoring exposure of people to physical advertisements, comprising the steps of receiving positional data records associated with each of a plurality of mobile devices within a given geographical region, from a base station; setting a mobility descriptor for each corresponding user; determining whether each user is predicted to be within a predetermined viewing range of one or more advertisements, in response to the set mobility descriptor, instantaneous speed and direction, and a predetermined viewing range; and counting the number of users who are predicted to be within said predetermined viewing range.

### Brief Description of the Drawings

In the drawings:
- Fig. 1 is a schematic illustration of a system for monitoring exposure to physical advertisements; and
- Fig. 2 is a method for monitoring exposure to physical advertisements.

### Detailed Description of Preferred Embodiments

The present invention is a system and method for monitoring exposure of people to physical advertisements. Heretofore, the number of people who viewed a physical advertisement at a given time period could only be estimated. By matching instantaneous positional data of mobile device users with a known viewing range of a physical advertisement, exposure to the physical advertisement is now able to quantified, allowing the physical advertisement to be more accurately targeted.

The network over which the mobile devices communicate is described as being a cellular network, but it will be appreciated that the invention is similarly applicable to other networks as well.

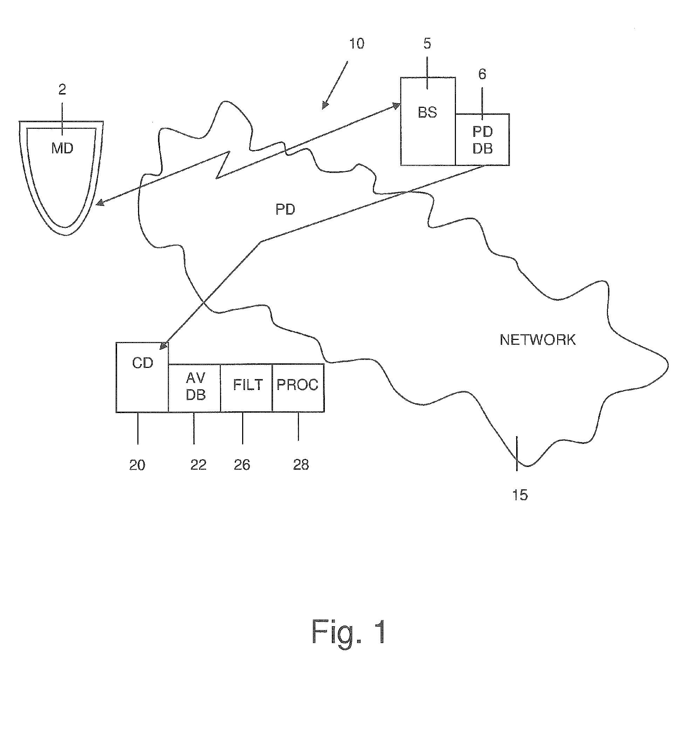

Fig. 1 illustrates monitoring system 10, according to one embodiment of the present invention. Monitoring system 10 comprises a plurality of mobile devices (MD) 2, each of which is held or accessed by a corresponding user of a mobile data network, and a computing device (CD) 20 used for monitoring and marketing purposes. Base station (BS) 5 for coordinating call and data traffic through a given cell is able to interface with each of mobile devices 2 and to determine their instantaneous position by triangulation or by means of the GPS module provided with a mobile device. The positional data (PD), including absolute position, rate of change in position, and traveling direction, at a given time for each device is stored in database 6.

Computing device 20, which may be a server, has an advertisement visibility (AV) database 22 a filtering module 26, and a processing module 28. In AV database 22 are stored the location of each advertisement to be monitored and the predetermined viewing range of each advertisement for a mobility descriptor of a mobile device user, based on whether the advertisement is a billboard and the passengers within each vehicle traveling along a predetermined segment of a given road are assumed to be able to view the advertisement, whether the user is a pedestrian and the degree of visibility thereof of the billboard at different sidewalks or other known landmarks is taken into account, or whether the advertisement is mounted on a public transportation vehicle such as a bus or train and only those vehicles traveling along a certain lane will be in viewing range of the advertisement, depending on which side of the public transportation vehicle is mounted the advertisement.

The mobility descriptor is an indication of the mobility state of the user, for example whether the user is standing, walking, or traveling in a vehicle. When a user is found to be traveling along a paved road above a predetermined speed of approximately 25 kilometers per hour, the mobility descriptor is set to a vehicular passenger. A passenger is considered to be in viewing range when the road along which the vehicle travels extends below the horizontal projection of the advertisement and is spaced therefrom by a distance of up to half a kilometer. When a user is found to be advancing below a predetermined speed of less than 5 kilometers per hour, the mobility descriptor is set to walking, requiring different viewing range criteria to be utilized than passengers. When considering a responsiveness level to advertisements, the processing module may weigh positional data with a high responsiveness level if the mobility descriptor of a user is set to standing, indicating that the user is glancing at the advertisement. Computing device 20 generates a viewing range in offline for each advertisement stored in the AV database with respect to each known mobility descriptor.

Computing device 20 has a working agreement with base station 5 to receive via data network 15 the recently acquired positional information stored in PD database 6. Due to local security regulations, the user's name for each mobile device cannot be divulged; however, certain user parameters, such as age, gender, present location, traveling speed, direction, and known origin location, insofar as the user has been found to be located at the origin for longer than a predetermined period of time, e.g. longer than 4 hours, can be provided to processing module 28. The knowledge of from which origin, e.g. a place of residence, a work site, or a school, the user departed may have impact on marketing studies.

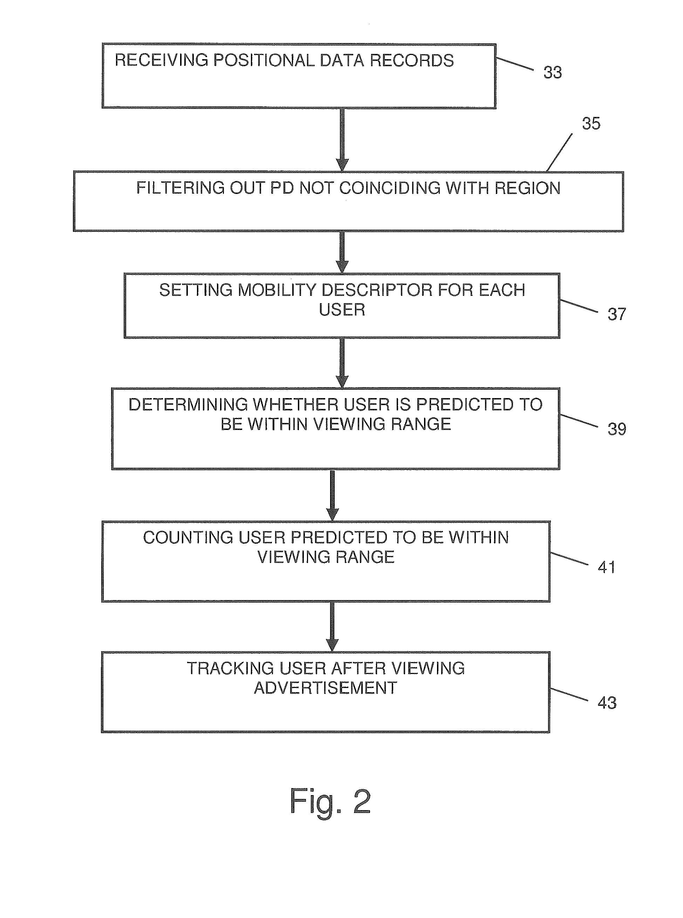

As shown in Fig. 2, the computing device first receives from the base station in step 33 the positional data records, for a given geographical region and a given time period. The filtering module then filters out in step 35 all received positional data that does not coincide with, or will not coincide when taking in to account the instantaneous traveling speed and direction of each user, the given region. The processing module then receives from the filtering module the unfiltered positional data and sets a mobility descriptor in step 37 for each user, after which it determines in step 39 whether each user is predicted to be within the predetermined viewing range of one or more advertisements stored in the AV database, in response to the set mobility descriptor, instantaneous speed and direction, and stored viewing range.

In step 41, the processing module counts the number of users who are predicted to be in the viewing range of each monitored advertisement during a given time period, and may reduce the total number by a known statistical average or value that reflects those users who will fail to see the advertisement even though they are in viewing range.

For example, generally only those bus passengers sitting on the side of the bus closest to the advertisement will see the advertisement, and therefore only approximately 50% of the bus passengers will be counted.

Also, many motor vehicle drivers may not notice the presence of an advertisement while engaging in a driving maneuver, such as passing a slower moving vehicle or making a turn, or while engaging in a telephone conversation using a speaker. In order to filter out these drivers, the processing module, after determining that a user is predicted to be within the predetermined viewing range of an advertisement, determines whether the user was engaged in a telephone conversation throughout the duration during which the corresponding vehicle traversed a geographical region that includes the viewing range as well as a predetermined border region serving as an uncertainty factor that borders the basic region of the viewing range. If one or more users traveling in the vehicle were engaged in a telephone conversation for only a fraction of the region traversing duration, a predetermined percentage of the traveling passengers are filtered out, to take into consideration users who did not notice the advertisement as a result of being engaged in a phone conversation.

The processing module also analyzes subsequently received positional data, to track the movement of a user in step 43 after having viewed the advertisement, to determine whether any purchasing patterns have been developed.

This system accordingly provides at least the following advantages:
1. Counting Viewers - The system allows the number of people exposed to a given physical advertisement to be counted. By quantifying the number of viewers of a physical advertisement, the derived information can be used to evaluate the appeal of the advertisement or the marketability of the product or service being advertised.
2. Causality Monitoring - The ability of an advertisement to cause a purchase to be made is a desirable result for any advertising campaign. The system is able to track patterns of an advertisement viewer, for example if he or she visited a store in which an advertised product is sold within a predetermined time period after having viewed a billboard. This tracking capability can provide a causality correlation between the impression and the execution of sale, similar to e-commerce.
3. Characterizing Viewers - Similar to e-commerce whereby there are a variety of methods to characterize the user profile of advertisement viewers, for example by referring to a previously selected search keyword or a previous user activity, the profile of a physical advertisement viewer may be determined when the corresponding positional data is received. The ability to characterize viewers of a physical advertisement allows statistical and marketing studies to be carried out. Thus it is able to be determined, according to user category, the origin and number of viewers, so as to deduce that causality is the driving force for their appearance in front of an advertisement and for assuming different purchasing characteristics over the day.
4. Pay to View Pricing Model - Pay Per Click (PPC) is a popular model in e-commerce. As the system is able to estimate the number of the viewers of a given advertisement, the advertiser may be charged according to its appeal, ranking or location.
5. Optimizing the Positioning of Advertisements -Reactive and predictive models are relied upon in order to determine the best placement of an e-commerce advertisement. These same models may be used with respect to physical advertisements. For reactive methods, advertisement planners are able to launch an optimal advertising campaign by changing the location of a physical advertisement during the course of a campaign and quantifying a difference in viewer responsiveness as a result of the change. For predictive methods, advertisement planners may utilize data mining models that take into consideration user characteristics and the location of the billboard in order to predict the number of viewers. This can be done thanks to a data set that includes a previous billboard location and the number of viewers that were counted.

While some embodiments of the invention have been described by way of illustration, it will be apparent that the invention can be carried out with many modifications, variations and adaptations, and with the use of numerous equivalents or alternative solutions that are within the scope of persons skilled in the art, without exceeding the scope of the claims.

In a system and method for monitoring exposure of people to physical advertisements, a computing device receives positional data records associated with each of a plurality of mobile devices within a given geographical region, from a base station, sets a mobility descriptor for each corresponding user, determines whether each user is predicted to be within a predetermined viewing range of one or more advertisements, in response to the set mobility descriptor, instantaneous speed and direction, and a predetermined viewing range, and counts the number of users who are predicted to be within the predetermined viewing range.

## Claims

1. A system for monitoring exposure of people to physical advertisements, comprising:
a) a plurality of mobile devices (2), each of which held or accessed by a corresponding user of a mobile data network;
b) a base station (5) for coordinating call and data traffic with respect to said plurality of mobile devices (2) within a given geographical region; and
c) a computing device (20) for quantifying exposure of said corresponding user to a physical advertisement,
wherein said base station (5) is operable to transmit instantaneous mobile device derived positional data to said computing device,
wherein said computing device (20) is operable to determine whether said transmitted positional data is indicative of said corresponding user being within viewing range of a physical advertisement and to thereby count a total number of users who were in viewing range of said physical advertisement within a given time period.

2. The system according to claim 1, wherein the computing device comprises:
a) an advertisement visibility database (22) in which are stored a location and predetermined viewing range of each physical advertisement to be monitored within a given zone of the region; and
b) a processing module (28) for matching instantaneous positional data of mobile device users with the predetermined viewing range of a physical advertisement, allowing exposure to said physical advertisement to be quantified.

3. The computed device according to claim 2, wherein the transmitted positional data is selected from the group consisting of absolute position, rate of change in position, and traveling direction, at a given time for each of the plurality of mobile devices (2).

4. The computing device according to claim 3, wherein the predetermined viewing range is a function of a discrete mobility state of the corresponding user which is derived from the transmitted positional data.

5. A method for monitoring exposure of people to physical advertisements, comprising the steps of:
a) receiving positional data records associated with each of a plurality of mobile devices within a given geographical region, from a base station;
b) setting a mobility descriptor for each corresponding user;
c) determining whether each user is predicted to be within a predetermined viewing range of one or more advertisements, in response to the set mobility descriptor, instantaneous speed and direction, and a predetermined viewing range; and
d) counting the number of users who are predicted to be within said predetermined viewing range.

6. The method according to claim 5, further comprising the step of tracking movement of a user after viewing an advertisement.

7. The method according to claim 5, further comprising the step of reducing the number of users who are predicted to be within the predetermined viewing range by a predetermined statistical average or value that reflects those users who will fail to see the advertisement even though they are in the viewing range.
